# EUROPÄISCHE PATENTSCHRIFT

(11) **EP 2 100 341 B1**
(45) Veröffentlichungstag und Bekanntmachung des Hinweises auf die Patenterteilung: **27.04.2016**
(21) Anmeldenummer: 07819610.2
(22) Anmeldetag: 06.11.2007
(51) Int. Cl.: H01M 2/30, H01M 10/0585, H01M 4/66, H01M 4/72, H01M 2/02, H01M 2/16, H01M 4/04, H01M 4/131, H01M 4/133, H01M 4/525, H01M 4/583, H01M 4/74, H01M 10/0525, H01M 10/0568, H01M 10/0569

(54) **GALVANISCHES ELEMENT MIT KURZSCHLUSS-SICHERUNG**
GALVANIC ELEMENT WITH SHORT CIRCUIT FUSE PROTECTION
ELÉMENT GALVANIQUE AVEC PROTECTION CONTRE LES COURTS-CIRCUITS

(30) Priorität: 06.11.2006 DE 102006053273
(43) Veröffentlichungstag der Anmeldung: 16.09.2009
(73) Patentinhaber: VARTA Microbattery GmbH, 73479 Ellwangen (DE); VOLKSWAGEN VARTA Microbattery Forschungsgesellschaft mbH & Co. KG, 73479 Ellwangen (DE)
(72) Erfinder: WOEHRLE, Thomas, 80807 Munich (DE); HALD, Rainer, 73479 Ellwangen (DE); POMPETZKI, Markus, 74405 Gaildorf (DE); KOHLBERGER, Markus, 73479 Ellwangen (DE); MAIER, Johannes, 73479 Ellwangen (DE); WURM, Calin, 73479 Ellwangen (DE); PERNER, Arno, 80339 München (DE); HAUG, Peter, 73235 Weilheim an der Teck (DE); ILIC, Dejan, 73479 Ellwangen (DE)
(74) Vertreter: Patentanwaltskanzlei Cartagena
(86) Internationale Anmeldenummer: PCT/EP2007/009590
(87) Internationale Veröffentlichungsnummer: WO 2008/055647

(56) Entgegenhaltungen:
- EP-A- 0 865 091
- EP-A- 1 691 384
- WO-A-01/97299
- US-A- 5 558 957
- US-A- 5 919 589
- US-A1- 2006 147 793

## Beschreibung

Die Erfindung betrifft eine Batterie, umfassend einen in ein Gehäuse eingelegten Zellenstapel aus mehreren Einzelzellen mit auf einem flächigen Separator angeordneten positiven und negativen Elektroden, die jeweils einen Stromkollektor aufweisen, der mit einer Ableiterfahne versehen ist.

Galvanische Elemente wie Lithium-Ionen-Zellen und Lithium-Polymer-Zellen enthalten in vielen Fällen einen Zellenstapel (Stack), der aus mehreren Einzelzellen besteht. Die Einzelzellen oder Einzelelemente, aus denen ein solcher Zellenstapel zusammengesetzt ist, sind in der Regel ein Verbund aus aktiven Elektrodenfilmen, vorzugsweise jeweils zwischen zwei Elektrodenhälften angeordneten metallischen Kollektoren (in der Regel Aluminium-Kollektoren, insbesondere aus Aluminium-streckmetall oder aus gelochter Aluminiumfolie, für die positive Elektrode und Kupfer-Kollektoren, insbesondere aus massiver Kupferfolie, für die negative Elektrode) und einem oder mehreren Separatoren. Häufig werden solche Einzelzellen als sogenannte Bizellen mit den möglichen Sequenzen negative Elektrode/Separator/positive Elektrode/Separator/negative Elektrode oder positive Elektrode/Separator/negative Elektrode/Separator/positive Elektrode hergestellt.

Zur Herstellung der Elektroden werden in der Regel aktive Materialien, Elektrodenbinder wie das Copolymer Polyvinylidenfluorid-Hexafluorpropylen (PVDF-HFP) und gegebenenfalls Zusätze wie beispielsweise Leitfähigkeitsverbesserer und Anteile eines Weichmachers, in vielen Fällen Dibutylphthalat (DBP), in einem organischen Lösungsmittel wie Aceton intensiv gemischt, zu einer Folie ausgezogen und auf einen geeigneten Kollektor aufgebracht. Die so gebildeten, mit Kollektoren versehenen Elektrodenfolien werden anschließend, beispielsweise in einem Laminationsprozeß, auf vorzugsweise sehr dünne, flächige Separatoren, insbesondere auf Folienseparatoren, aufgebracht und so zu den vorgenannten Einzelzellen, insbesondere zu den vorgenannten Bizellen, verarbeitet. Als Separatoren kommen beispielsweise dünne Folien aus Polyolefinen oder aus dem bereits erwähnten PVDF-HFP in Frage.

Das Aufbringen der Elektrodenfolien auf den Separator erfolgt in der Regel mittig, so daß der Separator einen freien Randbereich aufweist, der nicht von Elektrodenmaterial bedeckt ist.

Mehrere Einzelzellen oder Bizellen können dann zu dem bereits erwähnten Zellenstapel aufgeschichtet werden, der durch Einlegen in ein Gehäuse, beispielsweise in ein Gehäuse aus tiefgezogener Aluminiumverbundfolie, Befüllen mit Elektrolyt, Versiegeln des Gehäuses und abschließende Formation zu einer fertigen Batterie verarbeitet wird.

Die metallischen Kollektoren der Elektroden sind üblicherweise mit Ableiterfahnen versehen, die wiederum mit einem Ableiter verschweißt werden, der durch das Gehäuse nach außen geführt wird. Die Ableiterfahnen überlappen dabei üblicherweise mit dem erwähnten freien Randbereich des Separators und können mit diesem in Berührung kommen.

Um Raum zu sparen und eine hohe Energiedichte des galvanischen Elements zu erzielen, ist es bevorzugt, die Ableiterfahnen eng zusammen zu falten und mitsamt dem angeschweißten Ableiter umzufälten.

Insbesondere beim Aufschichten eines Zellenstapels aus Einzelzellen, den anschließenden Faltvorgängen sowie beim Einlegen des Zellenstapels in ein Gehäuse kann es jedoch vorkommen, daß ein Separator einer Einzelzelle durch Teile der Ableiterfahnen wie im Randbereich der Ableiterfahnen auftretenden Stanz- und Schnittgrate, geknickte Bereiche der Ableiterfahnen oder im Fall von Ableiterfahnen aus Streckmetall durch einzelne Streckmetall-Stege, die beispielsweise beim Ausstanzen der Elektrode entstehen können, durchstoßen oder zumindest beschädigt wird.

In der Folge kann es zu einem direkten Kontakt entgegengesetzt gepolter Elektroden und damit zu einem inneren Kurzschluß (einem sogenannten "Softshort") in einer Einzelzelle kommen, der zur Folge hat, daß der ganze Zellenstapel unbrauchbar wird.

Da in den letzten Jahren zur Steigerung der Energiedichte insbesondere in Lithium-Polymer-Zellen immer dünner werdende Separatoren zum Einsatz kommen, ist die Anzahl der auftretenden inneren Kurzschlüsse immer mehr angestiegen.

Aus der US 2006/0147793 A1 ist eine Wickelzelle bekannt, die aus Einzelzellen mit auf einem flächigen Separator angeordneten Elektroden aufgebaut ist. Diese weisen Stromkollektoren auf, die über Ableiteffahnen an einen Ableiter gekoppelt sind. Die Ableiter können dabei mit Isolierbändern abgedeckt werden, um den Separator vor mechanischer Beschädigung zu schützen.

Aus der US 2006/0035152 A1 ist es weiterhin bekannt, Kurzschlüssen entgegenzuwirken, indem Randbereiche von Ableiterfolien mit Isolatoren abgeklebt werden.

Der vorliegenden Erfindung liegt die Aufgabe zugrunde, die Kurzschlußsicherheit galvanischer Elemente der eingangs genannten Art zu erhöhen.

Diese Aufgabe wird gelöst durch die Batterie mit den Merkmalen des Anspruchs 1. Bevorzugte Ausführungsformen der erfindungsgemäßen Batterie sind in den abhängigen Ansprüchen 2 bis 12 dargestellt..

Eine erfindungsgemäße Batterie umfaßt mindestens eine Einzelzelle mit auf einem flächigen, vorzugsweise sehr dünnen Separator angeordneten Elektroden. Mindestens eine der Elektroden weist einen Stromkollektor auf, der mit einer Ableiterfahne versehen ist, die mit einem Randbereich des Separators überlappt.

Eine erfindungsgemäße Batterie zeichnet sich insbesondere dadurch aus, daß sie in besonderem Maß gegen die oben erwähnten inneren Kurzschlüsse geschützt ist.

Es ist bevorzugt, daß es dazu in dem Randbereich, in dem die Ableiterfahne mit dem Separator überlappt, mindestens eine dünne Schicht aufweist. Diese ist insbesondere derart angeordnet, daß zumindest ein unmittelbarer mechanischer Kontakt zwischen den seitlichen Rändern der Ableiterfahne und dem Separator unterbunden wird. In bevorzugten Ausführungsformen ist die mindestens eine dünne Schicht so angeordnet, daß der Kontakt zwischen Ableiterfahne und Separator nicht nur im Bereich der seitlichen Ränder der Ableiterfahne, sondern gänzlich unterbunden wird. Ableiterfahne und Separator können sich dann nicht berühren.

In einer bevorzugten Ausführungsform der erfindungsgemäßen Batterie ist die mindestens eine dünne Schicht zwischen der Ableiterfahne und dem Separator angeordnet. Sie ist in Form eines länglichen Streifens ausgebildet, der den Randbereich des Separators, in dem die Überlappung mit der Ableiterfahne auftritt, mindestens teilweise, vorzugsweise vollständig, abdeckt und in den abgedeckten Bereichen verstärkt. Ein unmittelbarer mechanischer Kontakt der Ableiterfahne mit dem Separator in dem Randbereich kann so vollständig unterbunden werden.

Die verwendete mindestens eine dünne Schicht ist in bevorzugter Ausführungsform chemisch inert gegen übliche Bestandteile einer galvanischen Zelle wie Elektrolyte aus organischen Carbonaten mit Lithium-Leitsalzen wie LiPF₆ oder LiBF₄. Vorzugsweise handelt es sich bei der mindestens einen dünnen Schicht um eine elektrisch isolierende Schicht. Zwingend ist dies natürlich nicht erforderlich, da erfindungsgemäß die mechanische Verstärkung im Vordergrund steht.

Bei der mindestens einen dünnen Schicht handelt es sich insbesondere um eine Schicht auf Polymerbasis.

Besonders bevorzugt handelt es sich bei der mindestens einen dünnen Schicht um eine Folie, insbesondere um eine Folie auf Basis von Polyethylen, Polypropylen, Polyethylentherephthalat, Polyetheretherketon, Polyacrylnitril, Poyltetrafluorethylen oder Polyimid. Jede dieser Folien kann ein oder beidseitig mit einer kratzfesten Schutzschicht versehen sein, um weitere Durchstossfestigkeit zu erreichen. Diese kratzfeste Schutzschicht kann beispielsweise aus Epoxydharz bestehen und ist bevorzugt zwischen 1 µm und 7 µm dick.

Die mindestens eine dünne Schicht kann mit dem Separator und/oder mit der Ableiterfahne verklebt sein, insbesondere mit einem Kleber auf Basis von Silikon, Acrylat oder einem polar modifizierten Polyolefin. Die gleichen Kleber eignen sich im übrigen auch als Klebeschicht zum Verkleben des Separators mit dem oben erwähnten umgeschlagenen Teil des Separators.

Die mindestens eine dünne Schicht kann auch aus einem Kleber, insbesondere einem Schmelzkleber, hergestellt sein. Dieser kann, abhängig von der gewünschten Ausführungsform, beispielsweise in Form eines länglichen Streifens auf den Randbereich des Separators oder auf die seitlichen Ränder der Ableiterfahne aufgebracht werden.

Vorzugsweise handelt es sich bei dem Schmelzkleber um einen Schmelzkleber auf Polyolefinbasis.

Ein Kleber hat den Vorteil, daß er sich leicht und flexibel als dünne Schicht applizieren lässt. Das Aufbringen der mindestens einen dünnen Schicht auf einen Separator oder auf die seitlichen Ränder der Ableiterfahne als Kleber lässt sich daher gut in einen Prozess zur Herstellung einer Batterie der vorgenannten Art integrieren.

Bei der mindestens einen Einzelzelle handelt es sich insbesondere um eine Bizelle. Diese weist vorzugsweise eine Aufeinanderfolge von negative Elektrode/Separator/positive Elektrode/Separator/negative Elektrode oder von positive Elektrode/Separator/negative Elektrode/Separator/positiver Elektrode auf.

In einer erfindungsgemäßen Batterie einsetzbare Separatoren bestehen vorzugsweise im wesentlichen aus mindestens einem Polyolefin. Bei dem mindestens einen Polyolefin kann es sich beispielsweise um Polyethylen handelt. Besonders bevorzugt können auch mehrlagige Separatoren verwendet werden, beispielsweise Separatoren aus einer Abfolge verschiedener Polyolefinschichten, beispielsweise mit der Abfolge Polyethylen/Polypropylen/Polyethylen. Grundsätzlich kommen jedoch auch andere polymerbasierte Werkstoffe als Materialien für Separatoren in erfindungsgemäßen galvanischen Elementen in Frage, so auch insbesondere das eingangs bereits erwähnte PVDF-HFP.

Es ist bevorzugt, daß eine erfindungsgemäße Batterie mindestens eine Einzelzelle mit mindestens einer Lithium interkalierenden Elektrode aufweist. Besonders bevorzugt handelt es sich bei der erfindungsgemäßen Batterie um eine Lithium-Ionen- oder um eine Lithium-Polymer-Zelle.

Vorzugsweise weist die erfindungsgemäße Batterie mindestens eine Einzelzelle mit mindestens einer positiven Elektrode auf, die Lithiumkobaltoxid (LiCoO₂) als aktives Material aufweist.

Weiterhin ist es bevorzugt, daß eine erfindungsgemäße Batterie mindestens eine Einzelzelle mit mindestens einer negativen Elektrode aufweist, die Graphit als aktives Material aufweist.

In Weiterbildung ist eine erfindungsgemäße Batterie dann besonders bevorzugt, wenn es mindestens eine Einzelzelle mit mindestens einer positiven Elektrode mit Lithiumkobaltoxid als aktivem Material und mindestens einer negativen Elektrode mit Graphit als aktivem Material aufweist, wobei die Einzelzelle dann vorzugsweise eine Aufeinanderfolge von negative Elektrode/Separator/positive Elektrode/Separator/negative Elektrode oder von positive Elektrode/Separator/negative Elektrode/Separator/positive Elektrode aufweist.

Eine erfindungsgemäße Batterie weist bevorzugt mindestens eine Elektrode mit einem Stromkollektor und einer Ableiterfahne aus Aluminium, insbesondere aus Aluminium-Streckmetall oder aus gelochter Aluminiumfolie, auf. Bei der mindestens einen Elektrode mit Aluminiumkollektor und -ableiterfahne handelt es sich insbesondere um die positive Elektrode.

Weiterhin weist eine erfindungsgemäße Batterie insbesondere mindestens eine Elektrode mit einem Stromkollektor und einer Ableiterfahne aus Kupfer, insbesondere aus ungelochter Kupferfolie, auf. Bei der mindestens einen Elektrode mit Kupferkollektor und -ableiterfahne handelt es sich insbesondere um die negative Elektrode.

Die Elektroden einer erfindungsgemäßen Batterie sind in einer bevorzugten Ausführungsform auf den Separator laminiert. Die Lamination erfolgt bevorzugt bei hohen Temperaturen und unter Druck. Die Temperaturen sind dabei insbesondere an den Separator anzupassen, der bei dem Laminationsprozeß nicht schmelzen oder schrumpfen sollte.

Die in einer erfindungsgemäßen Batterie bevorzugt einsetzbaren Separatoren weisen bevorzugt eine Dicke von 3 µm bis 50 µm, insbesondere von 10 µm bis 30 µm, besonders bevorzugt von 12 µm bis 18 µm, auf. Im Randbereich können sie dabei gegebenenfalls, entsprechend einer der oben genannten Ausführungsformen, verstärkt sein, wobei ihre Dicke in diesem Bereich dann vorzugsweise etwa verdoppelt ist.

Die Elektroden einer erfindungsgemäßen Batterie weisen bevorzugt eine Dicke von 50 µm bis 200 µm, insbesondere von 70 µm bis 160 µm, auf.

Die angegebenen Werte beziehen sich dabei auf "fertige" Elektroden, also Elektroden, die mit einem Kollektor mit Ableiterfahne versehen sind.

Die Kollektoren und die Ableiterfahnen einer erfindungsgemäßen Batterie weisen bevorzugt eine Dicke von 5 µm bis 50 µm, insbesondere von 7 µm bis 40 µm, auf. Für Kollektoren und Ableiterfahnen aus Aluminium ist insbesondere eine Dicke im Bereich von 10 µm bis 40 µm bevorzugt. Für Kollektoren und Ableiterfahnen aus Kupfer ist insbesondere eine Dicke im Bereich von 6 µm bis 14 µm bevorzugt.

Die mindestens eine dünne Schicht weist besonders bevorzugt eine Dicke auf, die die Dicke der Elektroden nicht übersteigt. Dadurch wird erreicht, daß sich durch die mindestens eine dünne Schicht die maximale Dicke eines Zellenstapels aus Bizellen und damit die Energiedichte einer erfindungsgemäßen Batterie nicht ändert.

Eine erfindungsgemäße Batterie weist in der Regel einen Elektrolyten auf, insbesondere eine Mischung aus Ethylencarbonat und Diethylcarbonat mit mindestens einem Lithium-Leitsalz.

Desweiteren weist eine erfindungsgemäße Batterie in bevorzugter Ausführungsform ein Gehäuse aus einer Verbundfolie auf, insbesondere ais einer Verbundfolie, die mindestens eine Metallfolie umfaßt und vorzugsweise innenseitig mit Isoliermaterial beschichtet ist.

Überraschenderweise wurde gefunden, daß erfindungsgemäße Batterien gegenüber herkömmlichen Zellen nicht nur Vorteile im Hinblick auf ihre erhöhte Kurzschlußsicherheit insbesondere im Randbereich des Separators aufweisen. Es hat sich nämlich ergeben, daß erfindungsgemäße Batterien beim ersten Laden und Entladen auch geringere Formationsverluste als vergleichbare herkömmliche Elemente aufweisen. Darüber hinaus halten sie überraschenderweise auch ihre Spannung bei längerer Lagerung besser als vergleichbare herkömmliche galvanische Elemente. Als Grund dafür wird angenommen, daß über die latent Kurzschluß-gefährdeten Stellen (insbesondere im Aluminium-Ableiter-Bereich) der galvanischen Elemente mit herkömmlichem Aufbau eine schleichende Entladung stattfindet, während bei erfindungsgemäßen Batterien die aufgebrachte mindestens eine dünne Schicht die Spannung nicht oder weit weniger durchschlagen lässt.

Weitere Merkmale der Erfindung ergeben sich aus der nachfolgenden Beschreibung von bevorzugten Ausführungsformen und Abbildungen in Verbindung mit den Unteransprüchen. Hierbei können die einzelnen Merkmale jeweils für sich oder zu mehreren in Kombination miteinander bei einer Ausführungsform der Erfindung verwirklicht sein. Die beschriebenen besonderen Ausführungsformen dienen lediglich zur Erläuterung und zum besseren Verständnis der Erfindung und sind in keiner Weise einschränkend zu verstehen.

### Figurenbeschreibung

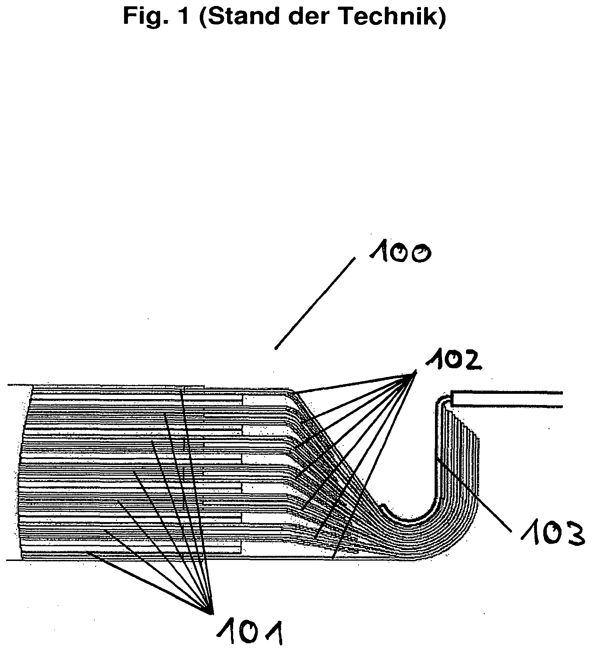

- Fig. 1: zeigt einen Querschnitt (Auszug) eines aus dem Stand der Technik bekannten Zellenstapels 100 aus mehreren Einzelzellen 101. Ein Zellenstapel 100 weist mehrere Einzelzellen 101 mit zusammengefalteten Ableiterfahnen 102 und einen daran angeschweißten Ableiter 103 auf. Der Ableiter 103 ist im fertigen galvanischen Element aus dem Gehäuse (nicht dargestellt) herausgeführt und bildet den äußeren Kontakt. Der Ableiter 103 ist zusammen mit den angeschweißten Ableiterfahnen 102 umgefaltet, um Platz zu sparen und so die Energiedichte des galvanischen Elements zu erhöhen.

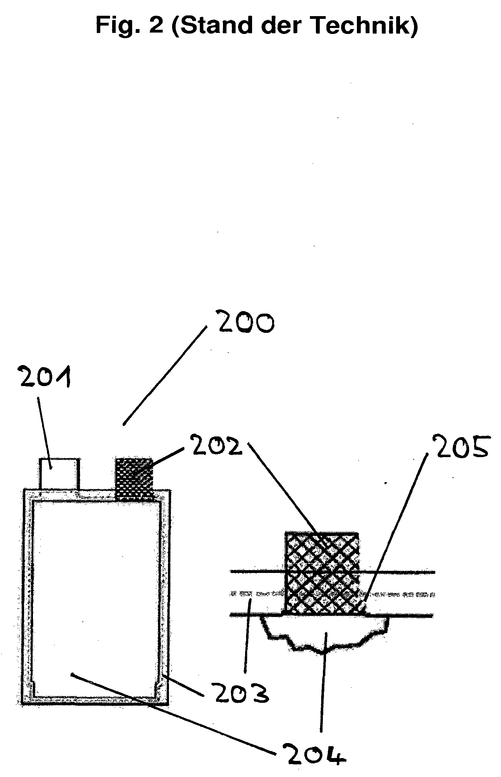

- Fig. 2: zeigt links eine aus dem Stand der Technik bekannte einzelne Einzelzelle 200 mit einer Ableiterfahne aus Kupferfolie 201 und einer Ableiterfahne aus Aluminium-Streckmetall 202. Auf einem Separator, von dem lediglich der Randbereich 203 sichtbar ist, sind beidseitig Elektroden angeordnet, von denen lediglich die positive Elektrode 204 sichtbar ist. Rechts zeigt Fig. 2 einen vergrößerten Ausschnitt der links dargestellten Einzelzelle 200. Zu erkennen ist die Ableiterfahne 202, der Randbereich des Separators 203 und ein Teil der positiven Elektrode 204. Am seitlichen Rand der Ableiterfahne 202 ist ein Streckmetall-Steg 205 zu erkennen, der beispielsweise beim Ausstanzen der Elektrode entstehen kann. Durch diesen Streckmetall-Steg kann der Separator, beispielsweise beim Aufschichten eines Zellenstapels, dem Zusammenfalten der Ableiterfahnen oder beim Einlegen des Zellenstapels in ein Gehäuse beschädigt oder durchstoßen werden, wodurch es zu einem Kurzschluß kommen kann.

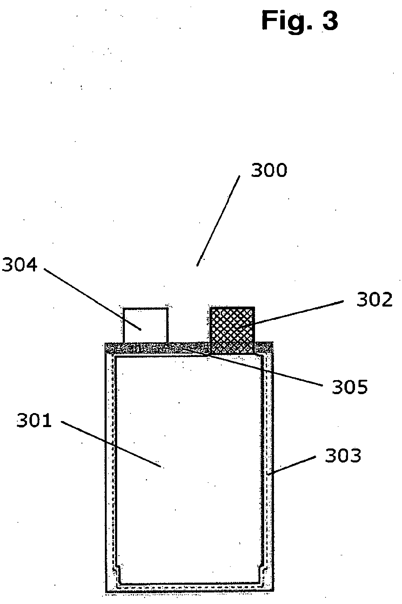

- Fig. 3: zeigt eine Einzelzelle 300 einer erfindungsgemäßen Batterie mit einer positiven Elektrode 301, die einen Stromkollektor (nicht sichtbar) mit einer Ableiterfahne 302 aus AluminiumStreckmetall aufweist, einem Separator 303, von dem nur der Randbereich sichtbar ist und einer Ableiterfahne 304 aus massiver Kupferfolie, die an den Stromkollektor der negativen Elektrode angebunden ist. Die negative Elektrode und der dazugehörige Stromkollektor befinden sich auf der Unterseite des Separators 303 (nicht sichtbar). Im Randbereich des Separators 303 ist eine Kunststofffolie oder eine Schicht aus Schmelzkleber als dünne Schicht 305 derart angeordnet, daß ein unmittelbarer mechanischer Kontakt der Ableiterfahne 302, insbesondere der seitlichen Ränder der Ableiterfahne 302, mit dem Randbereich des Separators 303, in dem die Ableiterfahne 302 mit diesem überlappt, unterbunden wird.

### Beispiele

I. Herstellung einer bevorzugten Ausführungsform einer erfindungsgemäßen Batterie
(1) Herstellung einer negativen Elektrode
   In einem 500 ml Kunststoffbehälter werden 200 ml Aceton vorgelegt. Man löst darin 24,75 g eines PVDF-HFP-Copolmers (Kynar Powerflex^{®} von Elf Atochem) mit einem HFP-Anteil von 6 Gew.-%. Mittels eines Wasserbads wird dabei auf ca. 40 °C temperiert und mit einem Labor-Rührer (Eurostar IKA^{®}) gerührt. Sobald eine klare Lösung entstanden ist, werden 7,1 g Ruß als Leitfähigkeitsverbesserer eingetragen. Nach 10 Minuten werden in kleinen Portionen 321,8 g Graphit MCMB 25-28 eingetragen; anschließend wird eine Stunde bei 1700 U/min nachgerührt.
   Die so hergestellte Beschichtungsmasse wird anschließend als Film mit einem Flächengewicht von ca. 15,4 mg/cm² beidseitig auf einen Kollektor aus 12 µm starker Kupferfolie aufgebracht.
(2) Herstellung einer positiven Elektrode
   In einem 500 ml Kunststoffbehälter werden 250 ml Aceton vorgelegt. Man löst darin 21,70 g PVDF-HFP-Copolmer (Kynar Powerflex^{®} von Elf Atochem mit 6 Gew.-% HFP-Anteil). Nach Entstehen einer klaren Lösung werden 3,1 g Leitruß und 3,1 g Graphit als Leitfähigkeitsverbesserer eingetragen. Nach kurzer Zeit werden 276,2 g Lithiumcobaltoxid portionsweise unter intensivem Rühren zugegeben.
   Die hergestellte Beschichtungsmasse wird auf Mylar^{®}-Trägerfolie mit Hilfe eines SCIMAT-Filmziehgeräts als Film ausgerakelt (Flächengewicht ca. 20 mg/cm²). Dieser Elektrodenfilm wird anschließend beidseitig auf einen Kollektor aus Aluminium-Streckmetall laminiert.
(3) Herstellung von Bizellen
   Bizellen für eine bevorzugte Ausführungsform eines galvanischen Elementes gemäß der vorliegenden Erfindung werden aus gemäß (1) hergestellten negativen Elektroden und gemäß (2) hergestellten positiven Elektroden gefertigt.
   Dazu werden aus den negativen Elektroden aus (1) und den positiven Elektroden aus (2) jeweils Streifen ausgestanzt. Diese werden anschließend zu Bizellen (positive Elektrode/Separator /negative Elektrode/Separator/positive Elektrode) konfektioniert. Dazu wird zunächst jeweils ein Separator (dreilagig aus Polypropylen/Polyethylen/Polypropylen) auf die beiden Seiten einer negativen Elektrode aufgebracht, vorzugsweise durch Lamination. In einem zweiten Schritt werden dann jeweils die obere und die untere positive Elektrode jeweils mittig auf die freien Seiten der Separatoren aufgebracht, ebenfalls vorzugsweise durch Lamination. Ein umlaufender Randbereich der Separatoren bleibt dabei frei von Elektrodenmaterial und überlappt jeweils in einem Teilbereich mit den Ableiterfahnen der positiven Elektrode.
(4) Auf den Randbereich des Separators einer gemäß (3) hergestellten Bizelle wird im nächsten Schritt ein Polyimidstreifen (Kapton^{®}) mittels eines Polyacrylatklebers aufgeklebt. Der Polyethylenstreifen wird dabei im überlappenden Bereich zwischen der Ableiterfahne und dem Separator angeordnet, so daß die Ableiterfahne den Separator nicht mehr berühren kann (siehe Fig. 5).
(5) Zwölf gemäß (4) mit einem Polyimidstreifen versehene Bizellen werden zu einem Zellenstapel aufgeschichtet. Dieser wird in ein Gehäuse aus tiefgezogener Aluminiumverbundfolie eingelegt. Anschließend erfolgt das Befüllen mit Elektrolyt, das Versiegeln des Gehäuses und eine abschließende Formation.
   Die hergestellte Batterie weist eine Länge von 41 mm, eine Breite von 34 mm und eine Höhe von 4,4 mm auf.
(6) Bei einem Produktionstestlauf wurden mehrere hundert Exemplare einer erfindungsgemäßen Batterie gemäß (5) hergestellt. Ausschuß in Folge eines inneren Kurzschlusses im Randbereich des Separators fiel dabei nicht an.

II. Mit einer gemäß I. hergestellten Batterie wurden Formationstests durchgeführt. Das galvanische Element wurde mit einer bestimmten Energiemenge beladen und anschließend wieder entladen. Die übertragenen Energiemengen bei Be- und Enladung wurden jeweils gemessen.
Dabei wurde überraschenderweise bei herkömmlichen Zellen (analog zu I. hergestellte Zellen, aber ohne den in Schritt (4) aufgebrachten Polyimidstreifen) ein höherer Formationsverlust als bei erfindungsgemäßen Batterien gemessen. Bei herkömmlichen Zellen beträgt der Fromationsverlust ca. 10 %, während die erfindungsgemäßen Zellen reduzierte Formationsverluste von ca. 8 % aufweisen.
Die Ergebnisse der jeweiligen Messungen sind in Tabelle 1 zusammengefasst:

**Tabelle 1: Formationsverluste**

| Aufbau | Erste Ladung [Ah] | Erste Entladung [Ah] | Formations-Verlust [%] |
|---|---|---|---|
| Herkömmliche Zelle | 0,674 | 0,607 | 10 |
| Galvanisches Element gemäß I. | 0,664 | 0,609 | 8 |

Wie bereits angedeutet wurde, könnte die Verringerung der Formationsverluste in erfindungsgemäßen Batterien darauf zurückzuführen sein, daß an latent Kurzschluß-gefährdeten Stellen (insbesondere im Aluminium-Ableiter-Bereich) der aufgebrachte Polyimidstreifen die Spannung während der Formation nicht oder weit weniger durchschlagen lässt.
III. Gemäß I. hergestellte Batterien wurden bis auf ca. 50 % ihrer Kapazität aufgeladen. Die Elemente wurden bei Raumtemperatur gehalten und es wurde in regelmäßigen Zeitabständen über einen Zeitraum von mehreren Monaten die Spannung der Batterien gemessen.
Bei herkömmlichen Zellen (analog zu I. hergestellte Zellen, aber ohne den in Schritt (4) aufgebrachten Polyimidstreifen) wurde im Gegensatz zu erfindungsgemäßen Batterien ein Spannungsabfall festgestellt (siehe Tabellen 2 und 3).

**Tabelle 2: Ergebnisse der Spannungsmessungen**

| Aufbau | Spannung zu Beginn der Lagerung [V] | Spannung nach 14 Tagen [V] | Spannung nach 1 Monat [V] | Spannung nach 3 Monaten [V] |
|---|---|---|---|---|
| Herkömmlicher Aufbau | 3,890 | 3,850 | 3,820 | 3,800 |
| Galvanisches Element nach I. | 3,890 | 3,890 | 3,890 | 3,886 |

Als Grund dafür wird, wie oben bereits erwähnt, angenommen, daß über die latent Kurzschluß-gefährdeten Stellen (insbesondere im Aluminium-Ableiter-Bereich) der galvanischen Elemente mit herkömmlichem Aufbau eine schleichende Entladung stattfindet, während bei erfindungsgemäßen Batterien der aufgebrachte Polyimidstreifen die Spannung nicht oder weit weniger durchschlagen lässt.
Die gleichen Untersuchungen wurden mit fast entladenen galvanischen Elementen bei entsprechend niedrigerer Spannung durchgeführt. Die Ergebnisse (zusammengefasst in Tabelle 3) waren vergleichbar. Auch hier wurde im Falle erfindungsgemäßer galvanischer Elemente ein geringerer bzw. gar kein Spannungsabfall beobachtet.

**Tabelle 3: Weitere Ergebnisse der Spannungsmessungen**

| Aufbau | Spannung Zu Beginn der Kontrolle [V] | Spannung nach 1h [V] | Spannung nach 2h [V] | Spannung nach 5 h [V] | Differenzspannung [mV] |
|---|---|---|---|---|---|
| Herkömmlicher Zelle | 2,890 | 2,890 | 2,889 | 2,885 | 5,0 |
| Galvanisches Element nach I. | 2,890 | 2,890 | 2,890 | 2,890 | 0,0 |

## Patentansprüche

1. Batterie umfassend einen in ein Gehäuse eingelegten Zellenstapel aus mehreren Einzelzellen (300) mit auf einem flächigen Separator (303) angeordneten positiven (301) und negativen Elektroden, die jeweils einen Stromkollektor aufweisen, der mit einer Ableiterfahne (302; 304) versehen ist, die auf einer Seite der Zellen (300) mit einem länglichen, nicht von den Elektroden abgedeckten Randbereich des Separators überlappt und diesen nach außen überragt, wobei die Ableiterfahnen mit einem Ableiter verschweißt sind, der aus dem Gehäuse nach außen geführt ist, und mitsamt dem Ableiter eng gefaltet sind, **dadurch gekennzeichnet, dass** in dem Randbereich mindestens eine dünne Schicht (305) derart angeordnet ist, daß ein unmittelbarer mechanischer Kontakt der seitlichen Ränder der Ableiterfahne mit dem Separator unterbunden wird, wobei die Schicht als länglicher Streifen ausgebildet ist, der quer zur Richtung der Ableiterfahne und parallel zu dem Randbereich ausgerichtet ist und diesen abdeckt.

2. Batterie nach Anspruch 1, **dadurch gekennzeichnet, daß** die mindestens eine dünne Schicht (305) eine Schicht auf Polymerbasis ist.

3. Batterie nach Anspruch 1 oder Anspruch 2, **dadurch gekennzeichnet, daß** die mindestens eine dünne Schicht (305) eine Folie ist.

4. Batterie nach Anspruch 3, **dadurch gekennzeichnet, daß** die Folie mit dem Separator (303) und/oder mit der Ableiterfahne (302) verklebt ist.

5. Batterie nach einem der Ansprüche 1 oder 2, **dadurch gekennzeichnet, daß** die mindestens eine dünne Schicht (305) aus einem Kleber hergestellt ist.

6. Batterie nach Anspruch 5, **dadurch gekennzeichnet, daß** es sich bei dem Kleber um einen Schmelzkleber auf Polyolefinbasis handelt.

7. Batterie nach einem der vorherigen Ansprüche, **dadurch gekennzeichnet, daß** der Separator (303) im wesentlichen aus mindestens einem Polyolefin besteht.

8. Batterie nach einem der vorherigen Ansprüche, **dadurch gekennzeichnet, daß** mindestens eine der Elektroden der mindestens einen Einzelzelle (300) eine Lithium interkalierende Elektrode ist.

9. Batterie nach einem der vorherigen Ansprüche, **dadurch gekennzeichnet, daß** die mindestens eine Einzelzelle (300) mindestens eine positive Elektrode aufweist, die LiCoO₂ als aktives Material aufweist.

10. Batterie nach einem der vorherigen Ansprüche, **dadurch gekennzeichnet, daß** die mindestens eine Einzelzelle (300) mindestens eine negative Elektrode aufweist, die Graphit als aktives Material aufweist.

11. Batterie nach einem der vorherigen Ansprüche, **dadurch gekennzeichnet, daß** es mindestens eine positive Elektrode mit einem Stromkollektor und einer Ableiterfahne aus Aluminium (302) aufweist.

12. Batterie nach einem der vorherigen Ansprüche, **dadurch gekennzeichnet, daß** es mindestens eine negative Elektrode mit einem Stromkollektor und einer Ableiterfahne aus Kupfer (304) aufweist.

## Claims

1. Battery comprising a cell stack which is inserted into a housing and is made up of a plurality of individual cells (300) having positive (301) and negative electrodes which are arranged on a flat separator (303) and which each have a current collector which is provided with an output lug (302; 304), which, on one side of the cells (300), overlaps an elongated edge area of the separator which is not covered by the electrodes, and projects beyond the said edge area to the exterior, wherein the output lugs are welded to an output conductor which is passed out of the housing to the exterior and are closely folded together with the output conductor, **characterized in that** at least one thin layer (305) is arranged in the edge area such that direct mechanical contact is prevented between the side edges of the output lug and the separator, wherein the layer is in the form of an elongated strip which is oriented transversely with respect to the direction of the output lug and parallel with respect to the edge area and covers the said edge area.

2. Battery according to Claim 1, **characterized in that** the at least one thin layer (305) is a layer based on polymer.

3. Battery according to Claim 1 or Claim 2, **characterized in that** the at least one thin layer (305) is a sheet.

4. Battery according to Claim 3, **characterized in that** the sheet is adhesively bonded to the separator (303) and/or to the output lug (302).

5. Battery according to either of Claims 1 and 2, **characterized in that** the at least one thin layer (305) is produced from an adhesive.

6. Battery according to Claim 5, **characterized in that** the adhesive is a fusion adhesive based on polyolefin.

7. Battery according to one of the preceding claims, **characterized in that** the separator (303) is composed essentially of at least one polyolefin.

8. Battery according to one of the preceding claims, **characterized in that** at least one of the electrodes of the at least one individual cell (300) is a lithium-intercalating electrode.

9. Battery according to one of the preceding claims, **characterized in that** the at least one individual cell (300) has at least one positive electrode which has LiCoO₂ as the active material.

10. Battery according to one of the preceding claims, **characterized in that** the at least one individual cell (300) has at least one negative electrode which has graphite as the active material.

11. Battery according to one of the preceding claims, **characterized in that** it has at least one positive electrode with a current collector at an output lug composed of aluminum (302).

12. Battery according to one of the preceding claims, **characterized in that** it has at least one negative electrode with a current collector and an output lug composed of copper (304).

## Revendications

1. Batterie comprenant une pile d'éléments insérée dans un boîtier composée de plusieurs éléments individuels (300) avec des électrodes positives (301) et négatives disposées sur un séparateur plan (303), qui comportent respectivement un collecteur de courant qui est doté d'une languette de parafoudre (302; 304) qui recouvre sur un côté des éléments (300) une zone de bordure longitudinale du séparateur non couverte par les électrodes et dépasse celle-ci vers l'extérieur, les languettes de parafoudre étant soudées à un parafoudre, qui est guidé depuis le boîtier vers l'extérieur, et étant étroitement pliées avec le parafoudre, **caractérisée en ce que** dans la zone de bordure au moins une couche mince (305) est disposée de telle manière qu'un contact directement mécanique des bords latéraux de la languette de parafoudre avec le séparateur est rendu impossible, la couche étant constituée sous forme d'une bande longitudinale qui est orientée transversalement à la direction de la languette de parafoudre et parallèlement à la zone de bordure et couvrant celle-ci.

2. Batterie selon la revendication 1, **caractérisée en ce que** l'au moins une couche mince (305) est une couche à base polymère.

3. Batterie selon la revendication 1 ou 2, **caractérisée en ce que** l'au moins une couche mince (305) est une feuille.

4. Batterie selon la revendication 3, **caractérisée en ce que** la feuille est collée au séparateur (303) et/ou à la languette de parafoudre (302).

5. Batterie selon l'une quelconque des revendications 1 ou 2, **caractérisée en ce que** l'au moins une couche mince (305) est fabriquée à partir d'une colle.

6. Batterie selon la revendication 5, **caractérisée en ce que** concernant la colle, il s'agit d'une colle thermofusible sur une base polyoléfine.

7. Batterie selon l'une quelconque des revendications précédentes, **caractérisée en ce que** le séparateur (303) est pour l'essentiel composé d'au moins une polyoléfine.

8. Batterie selon l'une quelconque des revendications précédentes, **caractérisée en ce qu'**au moins une des électrodes de l'au moins un élément individuel (300) est une électrode intercalant du lithium.

9. Batterie selon l'une quelconque des revendications précédentes, **caractérisée en ce que** l'au moins un élément individuel (300) comporte au moins une électrode positive qui comprend du LiCoO₂ comme matière active.

10. Batterie selon l'une quelconque des revendications précédentes, **caractérisée en ce que** l'au moins un élément individuel (300) comporte au moins une électrode négative qui comprend du graphite comme matière active.

11. Batterie selon l'une quelconque des revendications précédentes, **caractérisée en ce qu'**elle comporte au moins une électrode positive avec un collecteur de courant et une languette de parafoudre en aluminium (302).

12. Batterie selon l'une quelconque des revendications précédentes, **caractérisée en ce qu'**elle comporte au moins une électrode négative avec un collecteur de courant et une languette de parafoudre en cuivre (304).
